# EUROPEAN PATENT APPLICATION

(11) **EP 2 846 028 A1**
(43) Date of publication of application: **11.03.2015**
(21) Application number: 14175405.1
(22) Date of filing: 02.07.2014
(51) Int. Cl.: F02D 41/40, F01N 3/08, F01N 3/20, F01N 9/00, F02D 41/02, F01N 3/025

(54) **Control device of internal combustion engine**

(30) Priority: 28.08.2013 JP 2013176516
(71) Applicant: TOYOTA JIDOSHA KABUSHIKI KAISHA, Toyota-shi, Aichi-ken, 471-8571 (JP)
(72) Inventor: Bisaiji, Yuki, Toyota-shi, Aichi-ken, 471-8571 (JP); Yoshida, Kohei, Toyota-shi, Aichi-ken, 471-8571 (JP)
(74) Representative: Kuhnen & Wacker

(57) **Abstract**

In an internal combustion engine, a fuel injector (15), an NOₓ storage catalyst (13), and a particulate filter (14) are arranged in an engine exhaust passage. When post injection (PI) is performed for raising the temperature of the NOₓ storage catalyst (13) or particulate filter (14), if fuel for prevention of clogging (B, C, D) of the nozzle opening of the hydrocarbon feed valve (15) is injected from the hydrocarbon feed valve (15), the amount of the post injection (PI) is reduced or the post injection (PI) is stopped.

## Description

### Technical Field

The present invention relates to a control device of an internal combustion engine.

### Background Art

In an internal combustion engine in which an NO_{X} purification catalyst which can store NO_{X} is arranged in an engine exhaust passage, when the stored SO_{X} should be released from the NO_{X} purification catalyst, usually rich air-fuel ratio combustion gas is generated in the engine combustion chamber and the SO_{X} is released from the NO_{X} purification catalyst by making the rich air-fuel ratio exhaust gas flow into the NO_{X} purification catalyst. However, if trying to generate rich air-fuel ratio combustion gas in the engine combustion chamber in this way when the engine output torque is low, torque fluctuation ends up occurring. Therefore, there is known an internal combustion engine which is designed to feed reducing agent into the engine exhaust passage and release SO_{X} from the NO_{X} purification catalyst by this reducing agent (for example, see PTL 1).

### Citations List

### Patent Literature

PTL 1. Japanese Patent Publication No. 2009-162163A

### Summary of Invention

### Technical Problem

In this way, in this internal combustion engine, when the stored SO_{X} should be released from the NO_{X} purification catalyst, rich air-fuel ratio combustion gas is generated in the engine combustion chamber or reducing agent is fed into the engine exhaust passage. On the other hand, to raise the temperature of the NO_{X} purification catalyst, there is a case wherein fuel is injected from the fuel injector into the engine combustion chamber in the second half of the expansion stroke or in the exhaust stroke, or fuel is injected from the hydrocarbon feed valve into the engine exhaust passage. In this case, usually, either fuel is injected from the fuel injector into the engine combustion chamber or fuel is injected from the hydrocarbon feed valve into the engine exhaust passage, but in some cases, fuel is injected from the fuel injector into the engine combustion chamber and simultaneously fuel is injected from the hydrocarbon feed valve into the engine exhaust passage. However, if fuel is injected from the fuel injector into the engine combustion chamber and simultaneously fuel is injected from the hydrocarbon feed valve into the engine exhaust passage in this way, the fed fuel increases, so the problem arises that the temperature of the NO_{X} purification catalyst rapidly rises and thereby the NO_{X} purification catalyst is overheated. Solution to Problem

To solve this problem, according to the present invention, there is provided a control device of an internal combustion engine comprising a fuel injector arranged in an engine combustion chamber, an exhaust treatment device arranged in the engine exhaust passage, and a hydrocarbon feed valve arranged in the engine exhaust passage upstream of the exhaust treatment device, a main injection for generating engine output and a post injection for injecting fuel in a second half of an expansion stroke or in an exhaust stroke being performed from the fuel injector, characterized in that if fuel is injected from the hydrocarbon feed valve when the post injection is performed for raising the temperature of the exhaust treatment device, the amount of the post injection is reduced or the post injection is stopped. Advantageous Effects of Invention

it is possible to prevent the exhaust treatment device from overheating by reducing the amount of fuel of the post injection or stop the post injection when fuel is injected from the hydrocarbon feed valve.

### Brief Description of Drawings

[FIG. 1] FIG. 1 is an overall view of a compression ignition type internal combustion engine.
[FIG. 2] FIG. 2 is a view which schematically shows the surface part of a catalyst carrier.
[FIG. 3] FIGS. 3A and 3B are views for explaining an oxidation reduction reaction in an exhaust purification catalyst.
[FIG. 4] FIG. 4 is a view which shows an NO_{X} release control.
[FIG. 5] FIG. 5 is a view which shows a map of an exhausted NO_{X} amount NOXA.
[FIG. 6] FIG. 6 is a view which shows a fuel injection timing.
[FIG. 7] FIG. 7 is a view which shows an injection region WI and a post injection region PI from a hydrocarbon feed valve.
[FIG. 8] FIG. 8 is a time chart which shows a fuel injection method when performing an SO_{X} release control.
[FIG. 9] FIG. 9 is a time chart which shows a fuel injection method when regenerating a particulate filter.
[FIG. 10] FIG. 10 is a view for explaining a clogging prevention use injection from a hydrocarbon feed valve.
[FIG. 11] FIG. 11 is a flow chart for performing a clogging prevention control.
[FIG. 12] FIG. 12 is a time chart which shows a fuel injection method when performing an SO_{X} release control.
[FIG. 13] FIG. 13 is a time chart which shows a fuel injection method when regenerating a particulate filter.
[FIG. 14] FIG. 14 is a flow chart for performing an exhaust control.
[FIG. 15] FIG. 15 is a flow chart for performing a temperature elevation control.
[FIG. 16] FIG. 16 is a flow chart for performing an SO_{X} release control.
[FIG. 17] FIG. 17 is a time chart which shows another embodiment of a fuel injection method when performing an SO_{X} release control.
[FIG. 18] FIG. 18 is another embodiment of a flow chart for performing an SO_{X} release control.

### Description of Embodiments

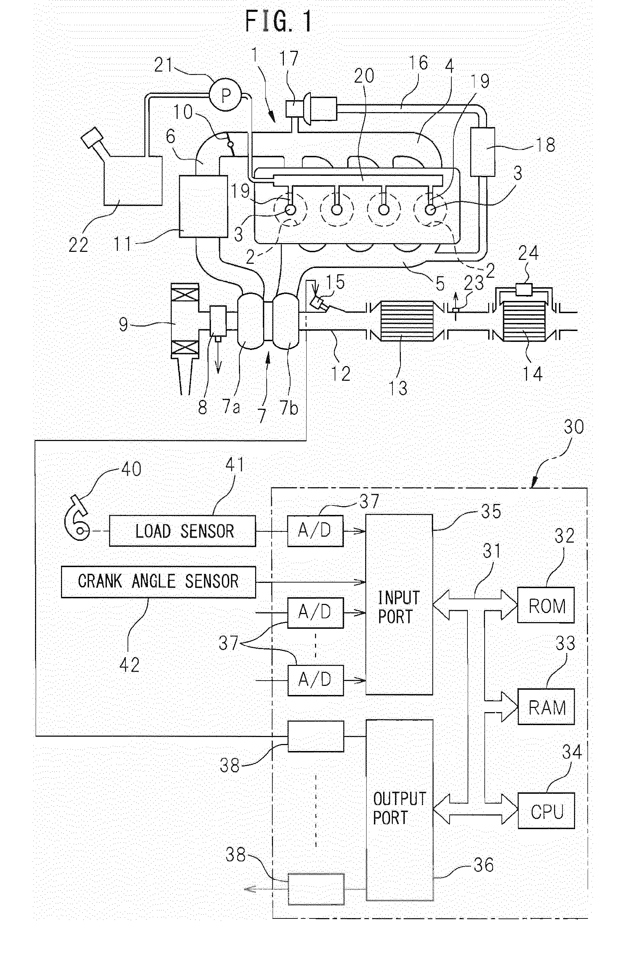

FIG. 1 is an overall view of a compression ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an intake air amount detector 8 to an air cleaner 9. Inside the intake duct 6, a throttle valve 10 which is driven by an actuator is arranged. Around the intake duct 6, a cooling device 11 is arranged for cooling the intake air which flows through the inside of the intake duct 6. In the embodiment which is shown in FIG. 1, the engine cooling water is guided to the inside of the cooling device 11 where the engine cooling water is used to cool the intake air.

On the other hand, the exhaust manifold 5 is connected to an inlet of an exhaust turbine 7b of the exhaust turbocharger 7, and an outlet of the exhaust turbine 7b is connected through an exhaust pipe 12 to an inlet of an exhaust treatment device 13. In an embodiment of the present invention, this exhaust treatment device 13 is comprised of an NO_{X} storage catalyst. An outlet of the NO_{X} storage catalyst 13 is connected to a separate exhaust treatment device 14. In an embodiment of the present invention, this exhaust treatment device 14 is comprised of a particulate filter. Upstream of the NO_{X} storage catalyst 13 inside the exhaust pipe 12, a hydrocarbon feed valve 15 is arranged for feeding hydrocarbons comprised of diesel oil or other fuel used as fuel for a compression ignition type internal combustion engine. In the embodiment shown in FIG. 1, diesel oil is used as the hydrocarbons which are fed from the hydrocarbon feed valve 15. Note that, the present invention can also be applied to a spark ignition type internal combustion engine in which fuel is burned under a lean air-fuel ratio. In this case, from the hydrocarbon feed valve 15, hydrocarbons comprised of gasoline or other fuel used as fuel of a spark ignition type internal combustion engine are fed.

On the other hand, the exhaust manifold 5 and the intake manifold 4 are connected with each other through an exhaust gas recirculation (hereinafter referred to as an "EGR") passage 16. Inside the EGR passage 16, an electronically controlled EGR control valve 17 is arranged. Further, around the EGR passage 16, a cooling device 18 is arranged for cooling the EGR gas which flows through the inside of the EGR passage 16. In the embodiment which is shown in FIG. 1, the engine cooling water is guided to the inside of the cooling device 18 where the engine cooling water is used to cool the EGR gas. On the other hand, each fuel injector 3 is connected through a fuel feed tube 19 to a common rail 20. This common rail 20 is connected through an electronically controlled variable discharge fuel pump 21 to a fuel tank 22. The fuel which is stored inside of the fuel tank 22 is fed by the fuel pump 21 to the inside of the common rail 20. The fuel which is fed to the inside of the common rail 21 is fed through each fuel feed tube 19 to the fuel injector 3.

An electronic control unit 30 is comprised of a digital computer provided with a ROM (read only memory) 32, a RAM (random access memory) 33, a CPU (microprocessor) 34, an input port 35, and an output port 36, which are connected with each other by a bidirectional bus 31. Downstream of the NO_{X} storage catalyst 13, a temperature sensor 23 is arranged for detecting the temperature of the exhaust gas flowing out from the NO_{X} storage catalyst 13, and a pressure difference sensor 24 for detecting a pressure difference before and after the particulate filter 14 is attached to the particulate filter 14. The output signals of these temperature sensor 23, pressure difference sensor 24 and intake air amount detector 8 are input through respectively corresponding AD converters 37 to the input port 35. Further, an accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, at the input port 35, a crank angle sensor 42 is connected which generates an output pulse every time a crankshaft rotates by, for example, 15°. On the other hand, the output port 36 is connected through corresponding drive circuits 38 to each fuel injector 3, the actuator for driving the throttle valve 10, hydrocarbon feed valve 15, EGR control valve 17, and fuel pump 21.

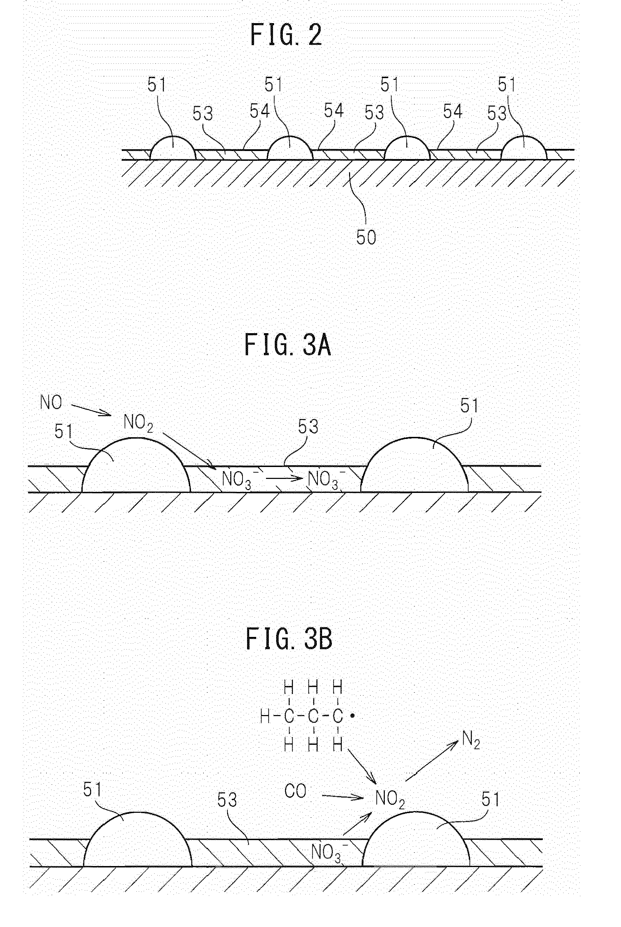

FIG. 2 schematically shows a surface part of a catalyst carrier which is carried on a substrate of the NO_{X} storage catalyst 13 shown in FIG. 1. At this NO_{X} storage catalyst 13, as shown in FIG. 2, for example, there is provided a catalyst carrier 50 made of alumina on which precious metal catalysts 51 comprised of platinum Pt are carried. Furthermore, on this catalyst carrier 50, a basic layer 53 is formed which includes at least one element selected from potassium K, sodium Na, cesium Cs, or another such alkali metal, barium Ba, calcium Ca, or another such alkali earth metal, a lanthanide or another such rare earth and silver Ag, copper Cu, iron Fe, iridium Ir, or another metal able to donate electrons to NO_{X}. In this case, on the catalyst carrier 50 of the NO_{X} storage catalyst 13, in addition to platinum Pt, rhodium Rh or palladium Pd may be further carried.

Now, in the internal combustion engine shown in FIG. 1, the air-fuel ratio of the exhaust gas which flows into the NO_{X} storage catalyst 13 is normally lean, and accordingly, the exhaust gas which flows into the NO_{X} storage catalyst 13 is normally in a state of oxygen excess. At this time, the NO which is contained in the exhaust gas, as shown in FIG. 3A, is oxidized on the platinum 51 and becomes NO₂. Next, this NO₂ is further oxidized and, as shown in FIG. 3A, diffuses in the basic layer 53 in the form of nitrate ions NO₃⁻ and becomes nitrates. In this way, the NO_{X} in the exhaust gas is absorbed in the form of nitrates inside the NO_{X} storage catalyst 13. Note that, at this time, sometimes the basic layer 53 temporarily adsorbs the NO_{X}. Therefore, the term of "storage" is hereinafter is used as a term including both "absorption" and "adsorption".

On the other hand, FIG. 3B shows the case where the air-fuel ratio of the exhaust gas which flows into the NO_{X} storage catalyst 13 is made rich when the NO_{X} is absorbed in the form of nitrates inside of the basic layer 53. In this case, the oxygen concentration in the exhaust gas falls, so the reaction proceeds in the opposite direction (NO₃⁻→NO₂), and consequently the nitrates absorbed in the basic layer 53 successively become nitrate ions NO₃⁻ and, as shown in FIG. 3B, are released from the basic layer 53 in the form of NO₂. Next, the released NO₂ is reduced by the hydrocarbons HC and CO contained in the exhaust gas. Accordingly, if the ratio of the air and fuel (hydrocarbons) which are supplied into the engine intake passage, combustion chambers 2, and upstream of the NO_{X} storage catalyst 13 in the exhaust passage is referred to as "the air-fuel ratio of the exhaust gas", the NO_{X} storage catalyst 13 has an NO_{X} storage release function of storing the NO_{X} when the air-fuel ratio of the exhaust gas is lean and releasing the stored NO_{X} when the oxygen concentration in the exhaust gas falls.

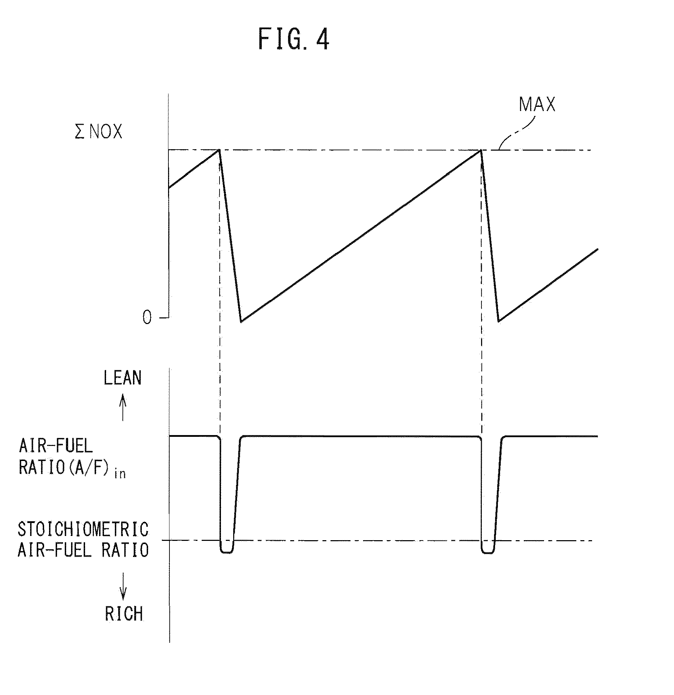

Next, referring to FIG. 4, an NO_{X} release control from the NO_{X} storage catalyst 13 will be explained. In this NO_{X} release control, as shown in FIG. 4, when the stored NO_{X} amount ΣNOX of NO_{X} which is stored in the basic layer 53 exceeds a predetermined allowable amount MAX, the air-fuel ratio (A/F)in of the exhaust gas flowing into the NO_{X} storage catalyst 13 is temporarily made rich. If the air-fuel ratio (A/F)in of the exhaust gas is made rich, the NO_{X} which was stored in the basic layer 53 when the air-fuel ratio (A/F)in of the exhaust gas was lean is released from the basic layer 53 all at once and reduced. Due to this, the NO_{X} is removed.

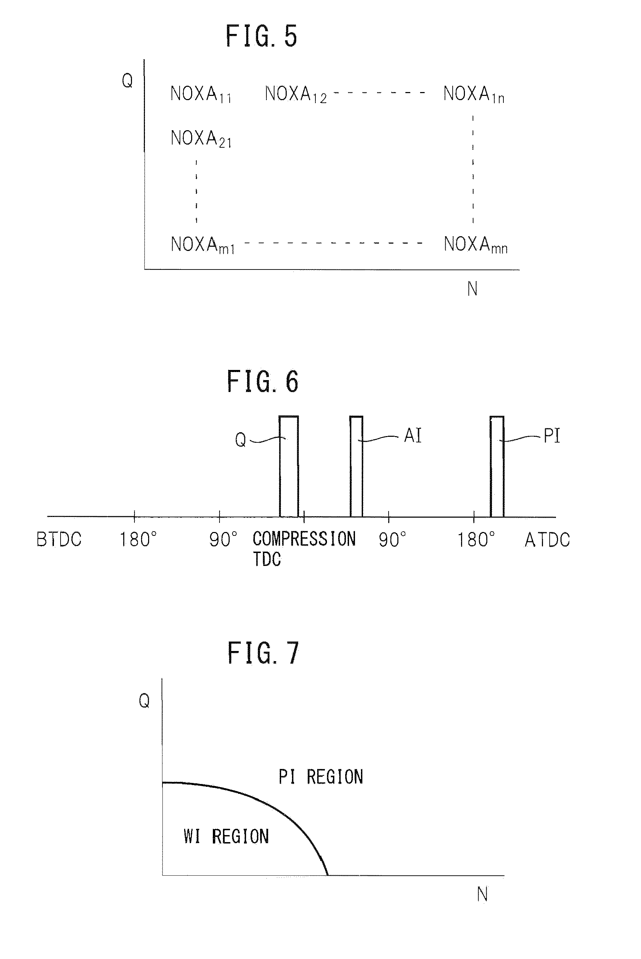

In this case, the stored NO_{X} amount ΣNOX is, for example, calculated from the amount of NO_{X} which is exhausted from the engine. In the embodiment according to the present invention, the exhausted NO_{X} amount NOXA of NO_{X} which is exhausted from the engine per unit time is stored as a function of engine speed N and the injection amount Q from the fuel injector 3 in the form of a map such as shown in FIG. 5 in advance in the ROM 32. The stored NO_{X} amount ΣNOX is calculated from this exhausted NO_{X} amount NOXA.

When performing control to release NO_{X}, as shown in FIG. 6, in addition to main injection Q from the fuel injector 3 to generate engine output, rich combustion gas generation injection AI is performed. This rich combustion gas generation injection AI is performed in a period where the fuel burns, but does not appear as engine output, that is, slightly before ATDC90° after top dead center in the compression stroke. At this time, the amount of fuel which is required for generating rich air-fuel ratio combustion gas is injected from the fuel injector 3. Note that, in FIG. 6, the abscissa shows the crank angle. In this way, in an embodiment according to the present invention, when performing control to release NO_{X}, rich combustion gas generation injection AI is performed from the fuel injector 3 in the first half of the expansion stroke after the completion of main injection Q for generating engine output to generate combustion gas of a rich air-fuel ratio. If this rich combustion gas generation injection AI is performed, the air-fuel ratio of the exhaust gas exhausted from the combustion chamber 2 becomes rich. Therefore, the air-fuel ratio (A/F)in of the exhaust gas flowing into the NO_{X} storage catalyst 13 becomes rich, and as a result, NO_{X} is released from the NO_{X} storage catalyst 13.

On the other hand, exhaust gas contains SO_{X}, and this SO_{X} is also stored in the basic layer 53 of the NO_{X} storage catalyst 13. In this case, if the amount of SO_{X} which is stored in the NO_{X} storage catalyst 13 is increased, the NO_{X} storage catalyst 13 can no longer store NO_{X}. Therefore, when the amount of SO_{X} which is stored in the NO_{X} storage catalyst 13 increases, it becomes necessary to release the stored SO_{X} from the NO_{X} storage catalyst 13. In this case, the SO_{X} which is stored in the NO_{X} storage catalyst 13 can be made to be released from the NO_{X} storage catalyst 13 by raising the temperature of the NO_{X} storage catalyst 13 to about 600°C and making the air-fuel ratio of the exhaust gas flowing into the NO_{X} storage catalyst 13 rich.

On the other hand, if the amount of particulate which is trapped by the particulate filter 14 increases, a regeneration action of the particulate filter 14 is performed. This regeneration action of the particulate filter 14 is performed by raising the temperature of the temperature of the particulate filter 14 to a regeneration temperature of 550°C or more. In this way, it is necessary to raise the temperature of the NO_{X} storage catalyst 13 when releasing the stored SO_{X} from the NO_{X} storage Catalyst 13, and further, as explained above, it is necessary to raise the temperature of the particulate filter 14 when making the particulate filter 14 regenerate. In this case, the temperature elevating action of the NO_{X} storage catalyst 13 is performed by additionally feeding fuel into the exhaust gas and using the heat of oxidation reaction of the additionally fed fuel. Further, the temperature elevating action of the particulate filter 14 is also performed by additionally feeding fuel into the exhaust gas and using the heat of oxidation reaction of the additionally fed fuel.

In this regard, to raise the temperature of the NO_{X} storage catalyst 13 or particulate filter 14, there are two methods of additionally feeding hydrocarbons, that is, fuel into the exhaust gas. One method is the method of feeding fuel from the hydrocarbon feed valve 15. The other method is the method of injecting fuel from the fuel injector 3 to the inside of the combustion chamber 2 in the second half of the expansion stroke or in the exhaust stroke. This injection method, that is, the injection of fuel from the fuel injector 3 in the second half of the expansion stroke or in the exhaust stroke is called "post injection". Now, when raising the temperature of the NO_{X} storage catalyst 13, if injecting fuel from the hydrocarbon feed valve 15, since the fuel is heavy, the injected fuel passes the front end face of the NO_{X} storage catalyst 13 and flows into the downstream side, then is burned at the downstream side of the NO_{X} storage catalyst 13. As a result, it is difficult to uniformly raise the temperature of the NO_{X} storage catalyst 13 from the front end surface to the downstream side. The same is true even when injecting fuel from the hydrocarbon feed valve 15 when the temperature of the particulate filter 14 should be raised.

As opposed to this, if injecting fuel from the fuel injector 3 in the second half of the expansion stroke or in the exhaust stroke to raise the temperature of the NO_{X} storage catalyst 13, that is, if performing post injection, the injected fuel is reformed to hydrocarbons with a small number of carbons atoms in the combustion chamber 2 and, as a result, light fuel is sent into the NO_{X} storage catalyst 13. If light fuel is sent into the NO_{X} storage catalyst 13, fuel is burned at the upstream side of the NO_{X} storage catalyst 13 as well and, as a result, the temperature of the NO_{X} storage catalyst 13 can be made to uniformly rise from the front end face to the downstream side. The same is true when performing post injection when raising the temperature of the particulate filter 14. Therefore, it is preferable to perform post injection when the temperature of the NO_{X} storage catalyst 13 should be raised and the temperature of the particulate filter 14 should be raised.

However, if performing post injection when the temperature inside the combustion chamber 2 is low such as at the time of engine low speed and low load operation, the problem arises that the injected fuel will not evaporate but will remain in a liquid state and stick to the inside wall surface of the combustion chamber 2 and as a result the lubrication oil will end up being diluted. Therefore, in an embodiment according to the present invention, at the time of engine low speed and low load operation, when the temperature of the NO_{X} storage catalyst 13 should be raised and when the temperature of the particulate filter 14 should be raised, fuel is injected from the hydrocarbon feed valve 15. FIG. 7 shows the region where post injection is performed when the temperature of the NO_{X} storage catalyst 13 should be raised and when the temperature of the particulate filter 14 should be raised by PI and shows the region where fuel is injected from the hydrocarbon feed valve 15 when the temperature of the NO_{X} storage catalyst 13 should be raised and the temperature of the particulate filter 14 should be raised by WI. Note that, in FIG. 7, Q shows the amount of injection from the fuel injector 3, while N shows the engine speed.

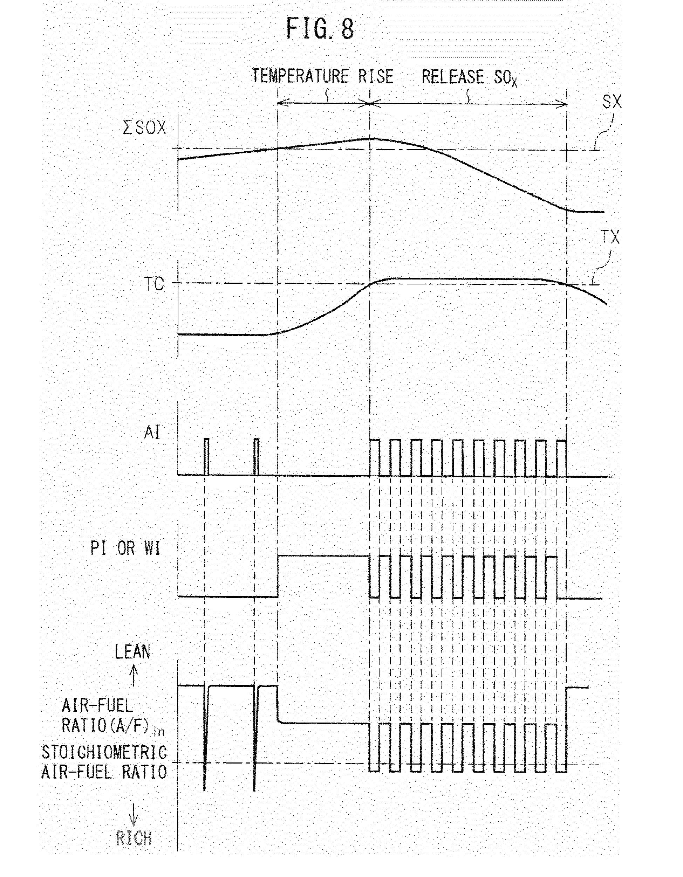

FIG. 8 shows an outline of the SO_{X} release control according to the present invention. Note that, in FIG. 8, ΣSOX shows the SO_{X} amount which is stored in the NO_{X} storage catalyst 13, TC shows the temperature of the NO_{X} storage catalyst 13, AI shows the rich combustion gas generation injection for generating combustion gas of a rich air-fuel ratio, PI shows post injection, WI shows the fuel injection from the hydrocarbon feed valve 15, and (A/F)in shows the air-fuel ratio of the exhaust gas flowing into the NO_{X} storage catalyst 13. As will be understood from FIG. 8, before the temperature elevating action for SO_{X} release control is started, when NO_{X} should be released from the NO_{X} storage catalyst 13, rich combustion gas generation injection AI is performed and thereby the air-fuel ratio (A/F)in of the exhaust gas flowing into the NO_{X} storage catalyst 13 is made rich.

Next, if the stored SO_{X} amount ΣSOX exceeds a predetermined allowable value SX, the temperature elevating action for SO_{X} release control is started. If the temperature elevating action for SO_{X} release control is started, post injection PI or fuel injection WI from the hydrocarbon feed valve 15 is performed in accordance with the operating state of the engine while maintaining the air-fuel ratio (A/F)in of the exhaust gas flowing into the NO_{X} storage catalyst 13 lean. Note that, when fuel is injected from the hydrocarbon feed valve 15, injection signals of short period is sent to the hydrocarbon feed valve 15. At this time, fuel is continuously injected from the hydrocarbon feed valve 15. Next, when the temperature TC of the NO_{X} storage catalyst 13 exceeds the SO_{X} release temperature TX, SO_{X} release control is started.

If SO_{X} release control is started, rich combustion gas generation injection AI is intermittently performed. As a result, the air-fuel ratio (A/F)in of the exhaust gas flowing into the NO_{X} storage catalyst 13 is intermittently made rich. When the air-fuel ratio (A/F) in of the exhaust gas flowing into the NO_{X} storage catalyst 13 is made rich, SO_{X} is released from the NO_{X} storage catalyst 13. Therefore, when SO_{X} release control is started, the stored SO_{X} amount ΣSOX gradually decreases. On the other hand, when the rich combustion gas generation injection AI is suspended, post injection PI or fuel injection WI from the hydrocarbon feed valve 15 is performed in accordance with the operating state of the engine to maintain the temperature TC of the NO_{X} storage catalyst 13 at the SO_{X} release temperature TX.

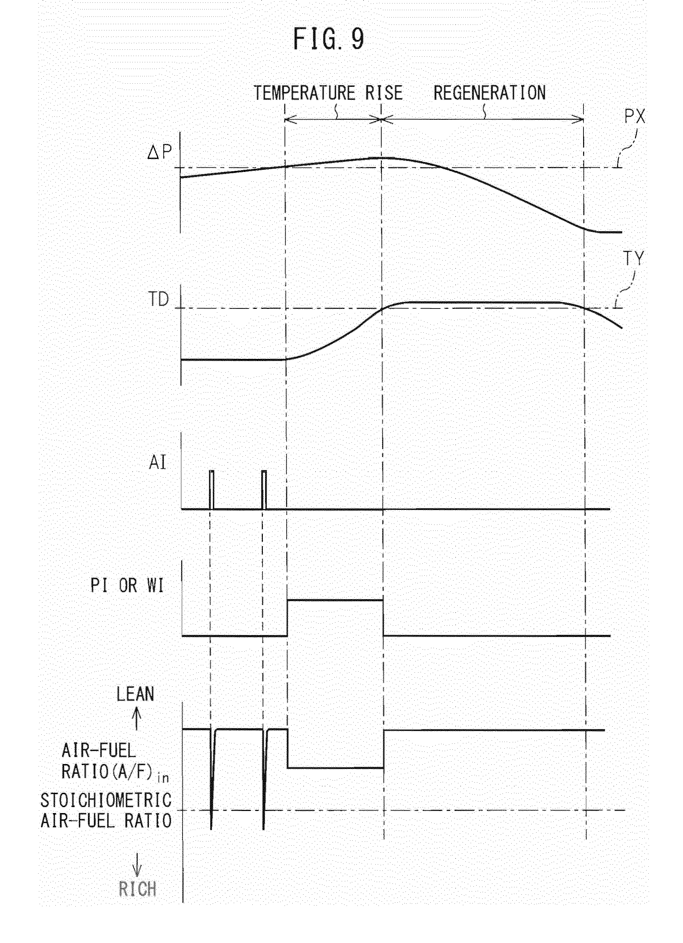

FIG. 9 shows an outline of control for regeneration of the particulate filter 14 according to the present invention. Note that, in FIG. 9, ΔP shows the pressure difference before and after the particulate filter 14, TD shows the temperature of the particulate filter 14, AI shows the rich combustion gas generation injection for generating combustion gas of a rich air-fuel ratio, PI shows the post injection, WI shows the fuel injection from the hydrocarbon feed valve 15, and (A/F)in shows the air-fuel ratio of the exhaust gas flowing into the NO_{X} storage catalyst 13. As will be understood from FIG. 9, before the temperature elevating action for regeneration of the particulate filter 14 is started, when NO_{X} should be released from the NO_{X} storage catalyst 13, rich combustion gas generation injection AI is performed and thereby the air-fuel ratio (A/F)in of the exhaust gas flowing into the NO_{X} storage catalyst 13 is made rich.

Next, if the pressure difference ΔP before and after the particulate filter 14 exceeds the predetermined allowable value PX, the temperature elevating action for regeneration of the particulate filter 14 is started. If the temperature elevating action for regeneration of the particulate filter 14 is started, post injection PI or fuel injection WI from the hydrocarbon feed valve 15 is performed in accordance with the operating state of the engine while maintaining the air-fuel ratio (A/F)in of the exhaust gas flowing into the NO_{X} storage catalyst 13 lean. Next, if the temperature TD of the particulate filter 14 exceeds the regeneration temperature TY, the regeneration action of the particulate filter 14 is started.

Next, control for prevention of clogging of the nozzle opening of the hydrocarbon feed valve 15 will be explained. As shown in FIG. 1, in case where the hydrocarbon feed valve 15 is arranged in the engine exhaust passage, if the injection of fuel from the hydrocarbon feed valve 15 is stopped, soot gradually builds up at the nozzle opening of the hydrocarbon feed valve 15. As a result, if the stopped period of injection of the hydrocarbon feed valve 15 is long, this deposited soot causes the nozzle opening of the hydrocarbon feed valve 15 to clog. Therefore, in an embodiment of the present invention, at the time of normal operation of the engine, when the stopped period of injection of the hydrocarbon feed valve 15 exceeds a predetermined time period, the hydrocarbon feed valve 15 is made to inject fuel for prevention of clogging of the nozzle opening. This predetermined time period is, for example, 10 seconds.

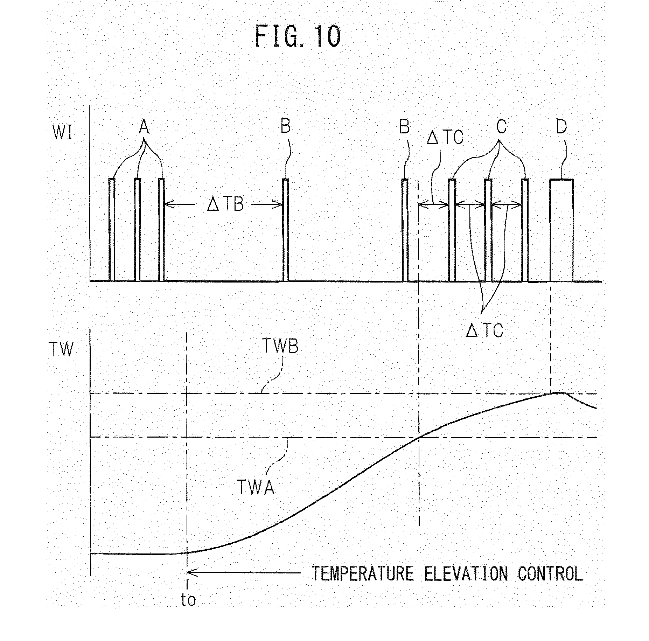

On the other hand, if the temperature elevating action for SO_{X} release control from the NO_{X} storage catalyst 13 is performed or the temperature elevating action for regeneration of the particulate filter 14 is performed, the temperature of the front end face of the hydrocarbon feed valve 15 rises and, as a result, the temperature of the front end face of the hydrocarbon feed valve 15 becomes high. In this regard, if the temperature of the front end face of the hydrocarbon feed valve 15 becomes high in this way, it has been proven that the fuel which remains at the nozzle opening of the hydrocarbon feed valve 15 is reformed and solidifies, and as a result, the nozzle opening of the hydrocarbon feed valve 15 becomes clogged. Further, at the time of the SO_{X} release control where rich combustion gas generation injection AI is intermittently performed, the exhaust gas temperature becomes extremely high, so the front end face of the hydrocarbon feed valve 15 becomes extremely high in temperature. As a result, it has been also proven that not only the fuel which remains at the nozzle opening of the hydrocarbon feed valve 15 is reformed and solidifies, but also sometimes deformation of the front end part of the hydrocarbon feed valve 15 is caused. Therefore, when the temperature elevating action for SO_{X} release control or SO_{X} release control is performed and when the temperature elevating action for regeneration of the particulate filter 14 is performed, control for prevention of clogging of the nozzle opening of the hydrocarbon feed valve 15 different from the time of normal operation of the engine becomes necessary. Next, this will be explained with reference to FIG. 10.

FIG. 10 shows the case where the temperature elevating action for SO_{X} release control or the temperature elevating action for regeneration of the particulate filter 14 is started at the time to. Note that, in FIG. 10, WI shows the fuel injection from the hydrocarbon feed valve 15, TW shows the temperature of the front end face of the hydrocarbon feed valve 15, TWA shows the temperature which causes reformation of the fuel which remains at the nozzle opening of the hydrocarbon feed valve 15, and TWB shows the temperature which causes deformation of the front end part of the hydrocarbon feed valve 15. Further, in FIG. 10, A shows the injection of fuel from the hydrocarbon feed valve 15 which is performed before the temperature elevating action for SO_{X} release control or the temperature elevating action for regeneration of the particulate filter 14 is started.

As shown in FIG. 10, if the temperature of the front end face TW of the hydrocarbon feed valve 15 exceeds the temperature TWA which causes reformation of fuel for a fixed time ΔTC or more, fuel for prevention of clogging C of the nozzle opening is injected from the hydrocarbon feed valve 15 and, thereby, reformed fuel is sprayed from the nozzle opening. As a result, it is possible to prevent the nozzle opening of the hydrocarbon feed valve 15 from clogging by the reformed fuel. Further, if the temperature of the front end face TW of the hydrocarbon feed valve 15 exceeds the temperature TWB which causes deformation of the front end part of the hydrocarbon feed valve 15, a large amount of fuel for prevention of clogging D is immediately injected from the hydrocarbon feed valve 15. As a result, not only reformed fuel is sprayed from the nozzle opening, but also the front end part of the hydrocarbon feed valve 15 is immediately cooled and, thereby, the front end part of the hydrocarbon feed valve 15 can be prevented from deforming.

On the other hand, even when the temperature elevating action for SO_{X} release control or when the temperature elevating action for regeneration of the particulate filter 14 is being performed, if a large amount of soot is exhausted from the engine, the nozzle opening of the hydrocarbon feed valve 15 sometimes clogs. Therefore, even when the temperature elevating action for SO_{X} release control or the temperature elevating action for regeneration of the particulate filter 14 is being performed, when the stopped period of injection of the hydrocarbon feed valve 15 exceeds a predetermined time period ΔTB, the hydrocarbon feed valve 15 is made to inject fuel B for prevention of clogging of the nozzle opening. This predetermined time period ΔTB is shorter than the injection time period of fuel for prevention of clogging at the time of normal operation of the engine. Further, this predetermined time period ΔTB is made shorter the greater the amount of soot in the exhaust gas.

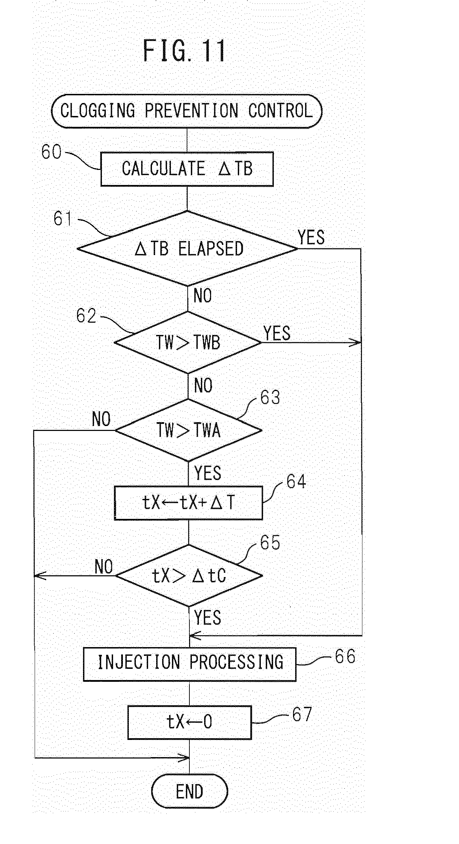

FIG. 11 shows the control routine for prevention of clogging when the temperature elevating action for SO_{X} release control, the SO_{X} release control, or the temperature elevating action for regeneration of the particulate filter 14 is performed. This routine is executed by interruption every fixed time.

Referring to FIG. 11, first, at step 60, the time period ΔTB for injection of fuel for preventing clogging due to soot after injection of the hydrocarbon feed valve 15 is stopped is calculated. Next, at step 61, it is judged if the elapsed time period from when injection from the hydrocarbon feed valve 15 has been stopped, that is, the stopped period of injection of the hydrocarbon feed valve 15 exceeds the time period ΔTB. When the stopped period of injection of the hydrocarbon feed valve 15 exceeds the time period ΔTB, the routine jumps to step 66 where fuel for prevention of clogging is injected from the hydrocarbon feed valve 15. Next, at step 67, the elapsed time period tX is cleared.

As opposed to this, when it is judged at step 61 that the stopped period of injection of the hydrocarbon feed valve 15 does not exceed the time period ΔTB, the routine proceeds to step 62 where it is judged if the temperature of the front end face TW of the hydrocarbon feed valve 15 exceeds the temperature TWB which causes deformation of the front end part of the hydrocarbon feed valve 15. Note that, it is possible to directly measure the temperature of the front end face TW of the hydrocarbon feed valve 15 and possible to estimate it from the exhaust gas temperature and exhaust gas flow rate. When it is judged at step 63 that the temperature of the front end face TW of the hydrocarbon feed valve 15 exceeds the temperature TWB, the routine jumps to step 66 where a large amount of fuel for prevention of clogging is injected from the hydrocarbon feed valve 15. As opposed to this, when it is judged at step 62 that the temperature of the front end face TW of the hydrocarbon feed valve 15 does not exceed the temperature TWB, the routine proceeds to step 63 where it is judged if the temperature of the front end face TW of the hydrocarbon feed valve 15 exceeds the temperature TWA which causes reformation of the fuel. When the temperature of the front end face TW of the hydrocarbon feed valve 15 does not exceed the temperature TWA which causes reformation of the fuel, the processing cycle is ended.

As opposed to this, when it is judged at step 63 that the temperature of the front end face TW of the hydrocarbon feed valve 15 exceeds the temperature TWA which causes reformation of the fuel, the routine proceeds to step 64 where the interruption time interval ΔT is added to tX to calculate the elapsed time tX from when the temperature of the front end face TW of the hydrocarbon feed valve 15 exceeds the temperature TWA. Next, at step 65, it is judged if the elapsed time tX exceeds the predetermined time ΔtC. When the elapsed time tX exceeds the predetermined time ΔtC, the routine proceeds to step 66 where fuel for prevention of clogging is injected from the hydrocarbon feed valve 15.

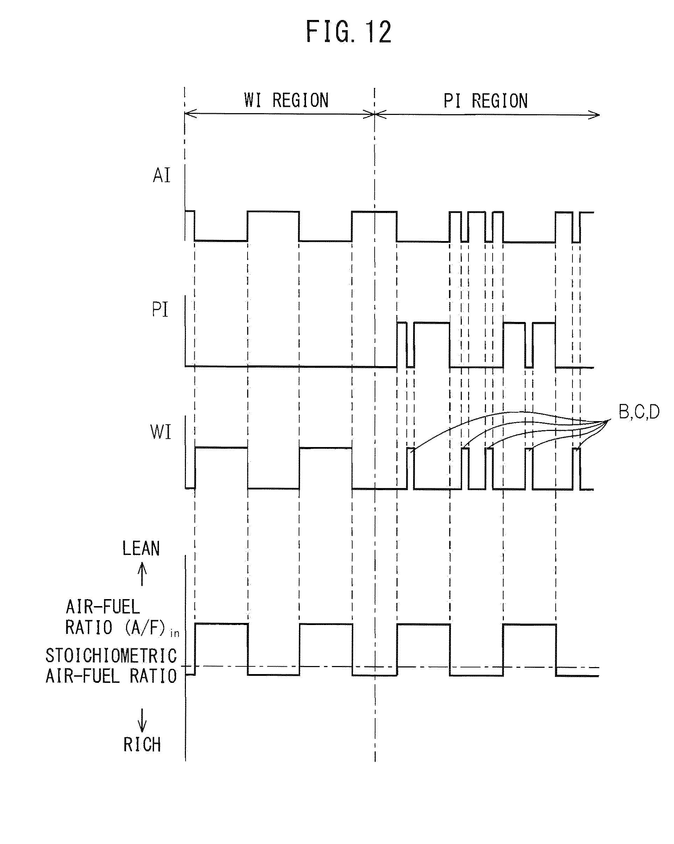

Next, referring to FIG. 12, a first embodiment of injection control when fuel for prevention of clogging is injected when SO_{X} release control is being performed will be explained. In FIG. 12, AI shows the rich combustion gas generation injection for generating combustion gas of a rich air-fuel ratio, PI shows post injection, WI shows fuel injection from the hydrocarbon feed valve 15, and (A/F)in shows the air-fuel ratio of the exhaust gas flowing into the NO_{X} storage catalyst 13. Note that, FIG. 12 shows as an example the case where the operating state of the engine is first in the region of fuel injection WI from the hydrocarbon feed valve 15 which is shown in FIG. 7, then the operating state of the engine shifts to the post injection region PI which is shown in FIG. 7. Further, in FIG. 12, B, C, and D show the injection of fuel for prevention of clogging which are shown by B, C, and D in FIG. 10.

Referring to FIG. 12, when the operating state of the engine is in the region of fuel injection WI from the hydrocarbon feed valve 15 which is shown in FIG. 7, rich combustion gas generation injection AI is intermittently performed to make the air-fuel ratio (A/F)in of the exhaust gas flowing into the NO_{X} storage catalyst 13 rich. On the other hand, when the rich combustion gas generation injection AI is suspended, fuel injection WI from the hydrocarbon feed valve 15 is performed to maintain the temperature TC of the NO_{X} storage catalyst 13 at the SO_{X} release temperature TX. At this time, the fuel injection WI from the hydrocarbon feed valve 15 is intermittently performed, so there is no danger of the nozzle opening of the hydrocarbon feed valve 15 becoming clogged. Therefore, at this time, the injection of fuel B, C, and D for prevention of clogging from the hydrocarbon feed valve 15 is not performed.

On the other hand, even when the operating state of the engine shifts to the post injection region PI which is shown in FIG. 7, the intermittent rich combustion gas generation injection AI is continuously performed. As opposed to this, if the operating state of the engine shifts to the post injection region PI which is shown in FIG. 7, the fuel injection when the rich combustion gas generation injection AI is suspended shifts from fuel injection WI from the hydrocarbon feed valve 15 to post injection PI. That is, at this time, the fuel injection WI from the hydrocarbon feed valve 15 is stopped. Therefore, at this time, the danger arises of the nozzle opening of the hydrocarbon feed valve 15 clogging. Therefore, at this time, as shown in FIG. 12, fuel B, C, and D for prevention of clogging is injected from the hydrocarbon feed valve 15.

However, in this way, if post injection PI is performed when fuel B, C, and D for prevention of clogging is injected from the hydrocarbon feed valve 15, the fuel B, C, and D for prevention of clogging is superposed over the injected fuel of the post injection PI, so the amount of fed fuel rapidly increases. As a result, the amount of heat generated at the NO_{X} storage catalyst 13 increases, so the problem arises that the temperature of the NO_{X} storage catalyst 13 rapidly rises and the NO_{X} storage catalyst 13 ends up overheating. Therefore, to prevent this problem from arising, in the embodiment which is shown in FIG. 12, when fuel B, C, and D for prevention of clogging is injected from the hydrocarbon feed valve 15, post injection PI is stopped. Of course, in this case, when fuel B, C, and D for prevention of clogging is injected from the hydrocarbon feed valve 15, the amount of injection of the post injection PI can be decreased.

Further, if rich combustion gas generation injection AI is being performed when fuel B, C, and D for prevention of clogging is injected from the hydrocarbon feed valve 15, the fuel B, C, and D for prevention of clogging is superposed over the injected fuel due to the rich combustion gas generation injection AI, so the amount of fed fuel rapidly increases. As a result, in this case as well, the amount of heat generation at the NO_{X} storage catalyst 13 rapidly increases, so the problem arises that the temperature of the NO_{X} storage catalyst 13 rapidly rises and the NO_{X} storage catalyst 13 ends up overheating. Therefore, at this time as well, to prevent such a problem from occurring, in the first embodiment which is shown in FIG. 12, when fuel B, C, and D for prevention of clogging is injected from the hydrocarbon feed valve 15, rich combustion gas generation injection AI is stopped. Of course, in this case, it is also possible to decrease the amount of injection of the rich combustion gas generation injection AI when fuel B, C, and D for prevention of clogging is injected from the hydrocarbon feed valve 15.

In this way, in the first embodiment according to the present invention, when SO_{X} should be released from the NO_{X} storage catalyst 13, rich combustion gas generation injection AI is performed from the fuel injector 3 in the second half of the expansion stroke after completion of the main injection Q for generating engine output to generate combustion gas of a rich air-fuel ratio, while when fuel for prevention of clogging of the nozzle opening of the hydrocarbon feed valve 15 is injected from the hydrocarbon feed valve 15 when rich combustion gas generation injection AI is being performed, the amount of injection of the rich combustion gas generation injection AI is decreased or the rich combustion gas generation injection AI is stopped.

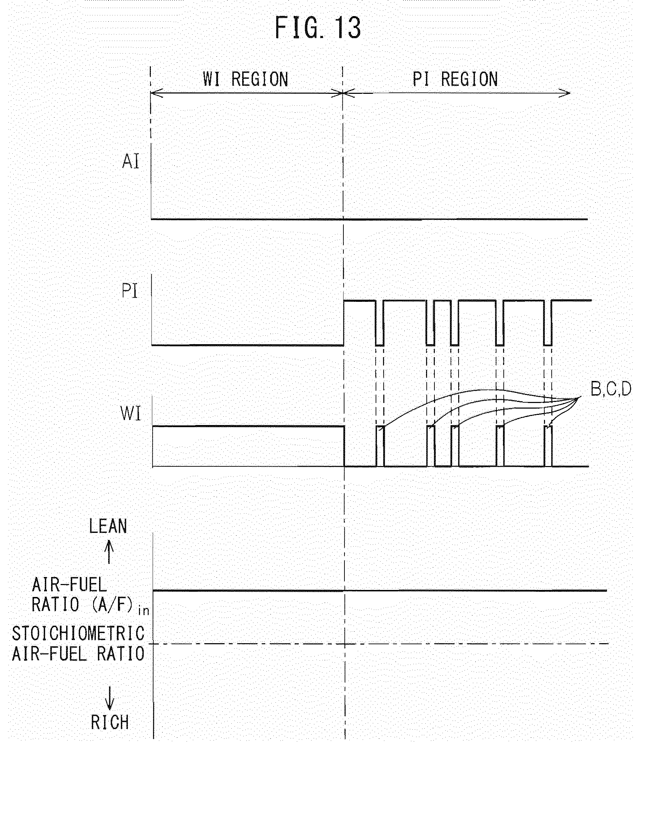

Next, referring to FIG. 13, the injection control when fuel for prevention of clogging is injected when the temperature elevating action for SO_{X} release control or the temperature elevating action for regeneration of the particulate filter 14 is being performed will be explained. In FIG. 13, AI shows the rich combustion gas generation injection to generate combustion gas of a rich air-fuel ratio, PI shows post injection, WI shows fuel injection from the hydrocarbon feed valve 15, and (A/F)in shows the air-fuel ratio of the exhaust gas flowing into the NO_{X} storage catalyst 13. Note that, FIG. 13 shows as an example the case where the operating state of the engine is first in the region of fuel injection WI from the hydrocarbon feed valve 15 which is shown in FIG. 7 and then the operating state of the engine shifts to the post injection region PI which is shown in FIG. 7. Further, in FIG. 13, B, C, and D show injection of fuel for prevention of clogging from the hydrocarbon feed valve 15 which are shown by B, C, and D in FIG. 10.

Referring to FIG. 13, when the operating state of the engine is in the region of fuel injection WI from the hydrocarbon feed valve 15 which is shown in FIG. 7, to raise the temperature of the particulate filter 14 to the regeneration temperature, the fuel injection WI from the hydrocarbon feed valve 15 is performed while maintaining the air-fuel ratio (A/F)in of the exhaust gas flowing into the NO_{X} storage catalyst 13 lean. At this time, the fuel injection WI from the hydrocarbon feed valve 15 is continuously performed, so there is no danger of the nozzle opening of the hydrocarbon feed valve 15 clogging. Therefore, at this time, injection of fuel B, C, and D for prevention of clogging from the hydrocarbon feed valve 15 is not performed.

On the other hand, when the operating state of the engine shifts to the post injection region PI which is shown in FIG. 7, the fuel injection for raising the temperature of the particulate filter 14 shifts from the fuel injection WI from the hydrocarbon feed valve 15 to post injection PI. That is, at this time, the fuel injection WI from the hydrocarbon feed valve 15 is stopped. Therefore, at this time, the danger arises of the nozzle opening of the hydrocarbon feed valve 15 clogging. Therefore, at this time, as shown in FIG. 13, fuel B, C, and D for prevention of clogging is injected from the hydrocarbon feed valve 15.

However, as explained above, if post injection PI is performed when fuel B, C, and D for prevention of clogging is injected from the hydrocarbon feed valve 15, the fuel B, C, and D for prevention of clogging will be superposed over the fuel injected by the post injection PI, so the amount of fed fuel will rapidly increase. As a result, the amount of heat generated at the NO_{X} storage catalyst 13 or the amount of heat generated at the particulate filter 14 will rapidly increase, so the problem arises that the temperature of the NO_{X} storage catalyst 13 or the temperature of particulate filter 14 will rapidly rise and the NO_{X} storage catalyst 13 or particulate filter 14 will end up overheating. Therefore, to prevent this sort of problem from occurring, in the embodiment which is shown in FIG. 12, when fuel B, C, and D for prevention of clogging is injected from the hydrocarbon feed valve 15, post injection PI is stopped. Of course, in this case, it is also possible to reduce the amount of injection of the post injection PI when fuel B, C, and D for prevention of clogging is injected from the hydrocarbon feed valve 15.

In this way, in the present invention, in a control device of an internal combustion engine comprising a fuel injector 3 arranged in an engine combustion chamber 2, an exhaust treatment device 13,14 arranged in the engine exhaust passage, and a hydrocarbon feed valve 15 arranged in the engine exhaust passage upstream of the exhaust treatment device 13,14, a main injection Q for generating engine output and a post injection PI for injecting fuel in a second half of an expansion stroke or in an exhaust stroke are performed from the fuel injector, and if fuel is injected from the hydrocarbon feed valve 15 when the post injection PI is performed for raising the temperature of the exhaust treatment device 13,14, the amount of the post injection PI is reduced or the post injection PI is stopped. In this case, in an embodiment according to the present invention, the exhaust treatment device 13,14 is comprised of an NO_{X} storage catalyst 13 which stores NO_{X} when the air-fuel ratio of the exhaust gas is lean and releases the stored NO_{X} when the air-fuel ratio of the exhaust gas is made rich or is comprised of a particulate filter 14.

Now then, explaining the present invention in a bit more detail, in an embodiment according to the present invention, as will be understood from FIG. 8 and FIG. 9, when the temperature of the exhaust treatment devices 13 and 14 should be raised, post injection PI or fuel injection WI from the hydrocarbon feed valve 15 is selectively performed in accordance with the operating state of the engine. In this case, if fuel B, C, and D for prevention of clogging of the nozzle opening of the hydrocarbon feed valve 15 is injected from the hydrocarbon feed valve 15 when the post injection PI is performed for raising the temperature of the exhaust treatment device 13 and 14, the amount of the post injection PI is reduced or the post injection PI is stopped. Further, in this case, fuel B, C, and D for prevention of clogging is injected when the predetermined time period ΔTB has elapsed after fuel finishes being injected from the hydrocarbon feed valve 15, when the temperature of the front end face TW of the hydrocarbon feed valve 15 is maintained at the predetermined temperature TWA or more, or when the temperature of the front end face TW of the hydrocarbon feed valve 15 becomes the predetermined temperature TWB or more.

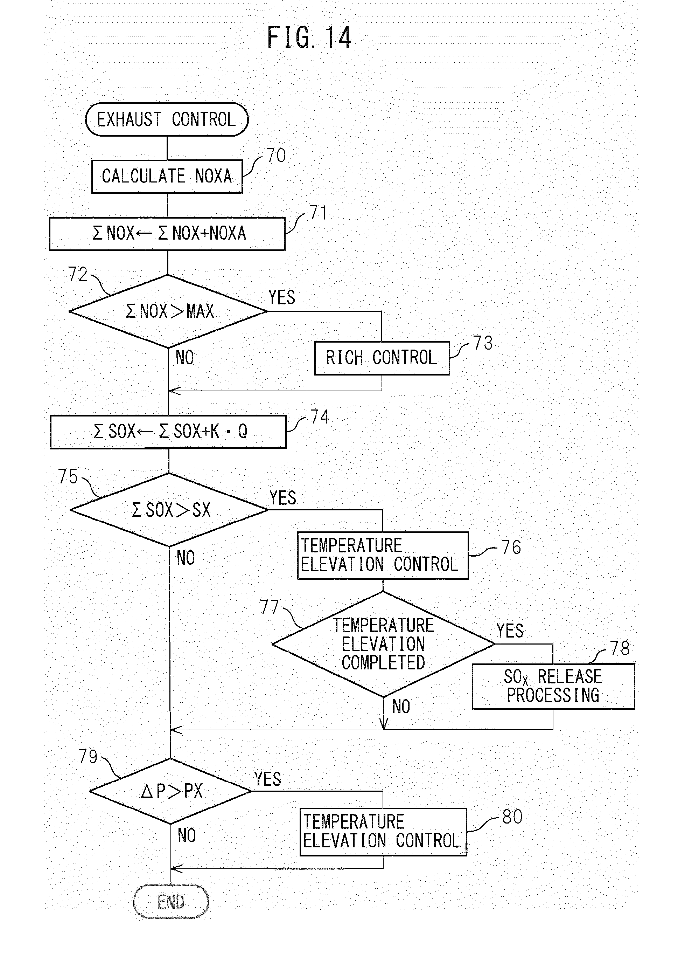

FIG. 14 shows the exhaust control routine. This routine is executed by interruption every fixed time.

Referring to FIG. 14, first, at step 70, the NO_{X} amount NOXA which is exhausted per unit time is calculated from the map which is shown in FIG. 13. Next, at step 71, the NO_{X} amount NOXA which is exhausted per unit time is added to ΣNOX to calculate the stored NO_{X} amount ΣNOX. Next, at step 72, it is judged if the stored NO_{X} amount ΣNOX exceeds the allowable value MAX. When ΣNOX>MAX, the routine proceeds to step 73 where rich combustion gas generation injection AI is performed. At this time, the air-fuel ratio of the exhaust gas flowing into the NO_{X} storage catalyst 13 is made temporarily rich. Due to this, NO_{X} is released from the NO_{X} storage catalyst 13.

On the other hand, the fuel which is injected from the fuel injector 3 contains sulfur S in a certain ratio. Therefore, at step 74, the value K·Q of a constant K multiplied with the amount of injection Q from the fuel injector 3 is added to ΣSOX to calculate the stored SO_{X} amount ΣSOX which is stored in the NO_{X} storage catalyst 13. Next, at step 75, it is judged if the stored SO_{X} amount ΣSOX exceeds the allowable value SX. When the stored SO_{X} amount ΣSOX exceeds the allowable value SX, the routine proceeds to step 76 where temperature elevating control of the NO_{X} storage catalyst 13 is performed. Next, at step 77, it is judged if the temperature elevating action of the NO_{X} storage catalyst 13 has been completed. When the temperature elevating action of the NO_{X} storage catalyst 13 has been completed, the routine proceeds to step 78 where SO_{X} release control from the NO_{X} storage catalyst 13 is performed. Next, at step 79, it is judged if the pressure difference ΔP before and after the particulate filter 14 exceeds the allowable value PX. When the pressure difference ΔP before and after the particulate filter 14 exceeds the allowable value PX, the routine proceeds to step 80 where temperature elevating control of the particulate filter 14 is performed.

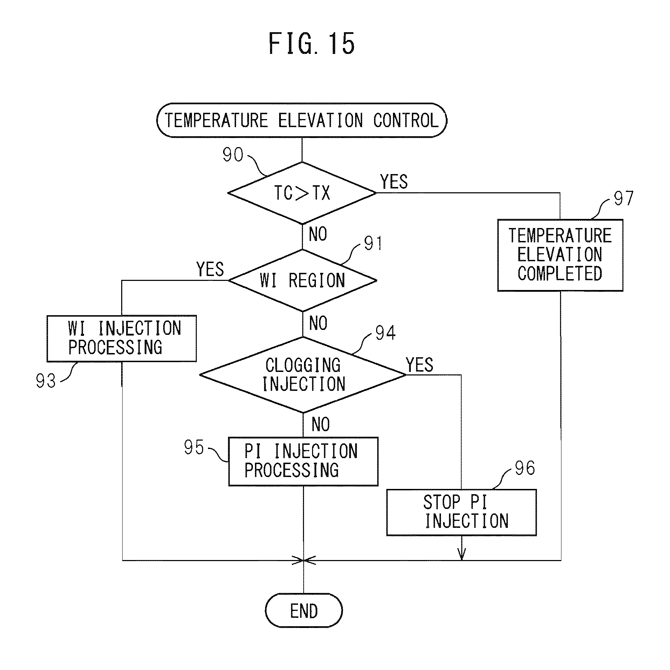

FIG. 15 shows the temperature elevation control which is performed at step 76 of FIG. 14.

Referring to FIG. 15, first, at step 90, it is judged if the temperature TC of the NO_{X} storage catalyst 13 exceeds the SO_{X} release temperature TX. When the temperature TC of the NO_{X} storage catalyst 13 does not exceed the SO_{X} release temperature TX, the routine proceeds to step 91 where it is judged if the operating state of the engine is in the region WI of fuel injection from the hydrocarbon feed valve 15 which is shown in FIG. 7. When the operating state of the engine is in the region WI of fuel injection from the hydrocarbon feed valve 15 which is shown in FIG. 7, the routine proceeds to step 93 where fuel WI is injected from the hydrocarbon feed valve 15. As opposed to this, when the operating state of the engine is not in the region WI of fuel injection from the hydrocarbon feed valve 15 which is shown in FIG. 7, that is, when the operating state of the engine is in the post injection region PI which is shown in FIG. 7, the routine proceeds to step 94 where it is judged if injection of fuel B, C, and D for prevention of clogging from the hydrocarbon feed valve 15 is being performed.

When at step 94 injection of fuel B, C, and D for prevention of clogging from the hydrocarbon feed valve 15 is not being performed, the routine proceeds to step 95 where post injection PI is performed. As opposed to this, when it is judged at step 94 that injection of fuel B, C, and D for prevention of clogging from the hydrocarbon feed valve 15 is being performed, the routine proceeds to step 96 where the post injection PI is stopped. Note that, in this case, as explained above, it is also possible to reduce the amount of fuel injection of the post injection PI. On the other hand, when it is judged at step 90 that the temperature TC of the NO_{X} storage catalyst 13 exceeds the SO_{X} release temperature TX, the routine proceeds to step 97 where the temperature elevating action of the NO_{X} storage catalyst 13 is stopped. Note that, the temperature elevation control which is performed at step 80 of FIG. 14 is similarly performed, so explanation of the temperature elevation control which is performed at step 80 of FIG. 14 will be omitted.

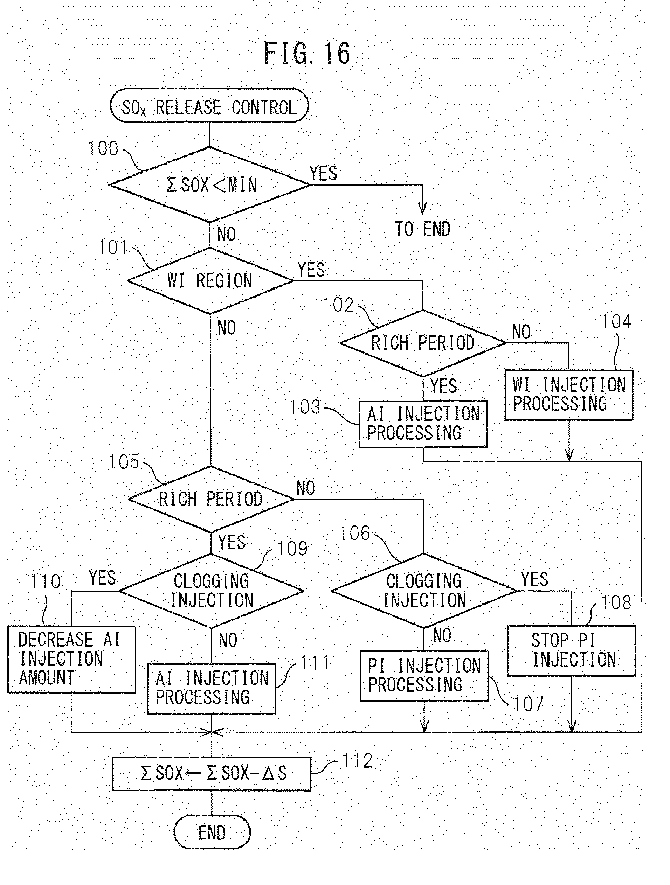

FIG. 16 shows the SO_{X} release control which is performed at step 78 of FIG. 14.

Referring to FIG. 16, first, at step 100, it is judged if the SO_{X} amount ΣSOX which is stored in the NO_{X} storage catalyst 13 becomes smaller than the set minimum value MIN. When the stored SO_{X} amount ΣSOX is greater than the set minimum value MIN, the routine proceeds to step 101 where it is judged if the operating state of the engine is in the region WI of fuel injection from the hydrocarbon feed valve 15 which is shown in FIG. 7. When the operating state of the engine is in the region WI of fuel injection from the hydrocarbon feed valve 15 which is shown in FIG. 7, the routine proceeds to step 102 where it is judged if the time period is the rich time period where the air-fuel ratio (A/F)in of the exhaust gas flowing into the NO_{X} storage catalyst 13 should be made rich. When the rich time period, the routine proceeds to step 103 where rich combustion gas generation injection AI is performed. As opposed to this, when not the rich time period, the routine proceeds to step 104 where the fuel injection WI from the hydrocarbon feed valve 15 is performed. Next, the routine proceeds to step 112.

On the other hand, when it is judged at step 101 that the operating state of the engine is not in the region WI of fuel injection from the hydrocarbon feed valve 15 which is shown in FIG. 7, that is, when the operating state of the engine is in the post injection region PI which is shown in FIG. 7, the routine proceeds to step 105 where it is judged if the time period is the rich time period where the air-fuel ratio (A/F)in of the exhaust gas flowing into the NO_{X} storage catalyst 13 should be made rich. When not the rich time period, the routine proceeds to step 106 where it is judged if injection B, C, and D of fuel for prevention of clogging from the hydrocarbon feed valve 15 is being performed. When injection of fuel B, C, and D for prevention of clogging from the hydrocarbon feed valve 15 is not being performed, the routine proceeds to step 107 where post injection PI is performed. As opposed to this, when it is judged at step 106 that injection of fuel B, C, and D for prevention of clogging from the hydrocarbon feed valve 15 is being performed, the routine proceeds to step 108 where post injection PI is stopped. Note that, in this case, as explained above, it is possible to decrease the amount of injected fuel of the post injection PI. Next, the routine proceeds to step 112.

On the other hand, at step 105, when it is judged that the time period is the rich time period, the routine proceeds to step 109 where it is judged if injection of fuel B, C, and D for prevention of clogging from the hydrocarbon feed valve 15 is being performed. When it is judged that injection of fuel B, C, and D for prevention of clogging from the hydrocarbon feed valve 15 is not being performed, the routine proceeds to step 111 where rich combustion gas generation injection AI is performed. As opposed to this, when it is judged at step 111 that injection of fuel B, C, and D for prevention of clogging from the hydrocarbon feed valve 15 is being performed, the routine proceeds to step 110 where the amount of injected fuel of the rich combustion gas generation injection AI is decreased. Note that, in this case, as explained above, rich combustion gas generation injection AI can be made to stop. Next, the routine proceeds to step 112. At step 112, the stored SO_{X} amount ΣSOX is decreased by the released SO_{X} amount ΔS. Next, when it is judged at step 100 that the SO_{X} amount ΣSOX which is stored in the NO_{X} storage catalyst 13 becomes smaller than the set minimum value MIN, SO_{X} release control is ended.

Now then, in a first embodiment which is shown from FIG. 12 to FIG. 16, when fuel B, C, and D for prevention of clogging is injected from the hydrocarbon feed valve 15 when post injection PI is being performed, post injection PI is stopped or the amount of injection of the post injection PI is decreased. Further, when fuel B, C, and D for prevention of clogging is injected from the hydrocarbon feed valve 15 when rich combustion gas generation injection AI is being performed, rich combustion gas generation injection AI is stopped or the amount of injection of the rich combustion gas generation injection AI is decreased. However, the case where fuel B, C, and D for prevention of clogging is injected from then hydrocarbon feed valve 15 when post injection PI is being performed and the case where fuel B, C, and D for prevention of clogging is injected from the hydrocarbon feed valve 15 when rich combustion gas generation injection AI is being performed differ somewhat in circumstance.

That is, as explained above, rich combustion gas generation injection AI is performed in a time period where fuel burns, but does not appear as engine output, that is, slightly before ATDC90° after top dead center in the compression stroke. However, if injecting fuel so that rich combustion gas is generated, the fuel is made to burn, so engine output actually ends up being generated. Therefore, when rich combustion gas generation injection AI is being performed, if the rich combustion gas generation injection AI is stopped or the amount of the rich combustion gas generation injection AI is reduced, the engine output torque will fluctuate. As opposed to this, the post injection PI, as will be understood from FIG. 6, is performed at a timing which is later than the rich combustion gas generation injection AI. Therefore, when post injection PI is performed, engine output is not generated. Therefore, when post injection PI is being performed, even if post injection PI is stopped or the amount of post injection PI is reduced, the engine output torque does not fluctuate.

On the other hand, if rich combustion gas generation injection AI is being performed, the inside of the NO_{X} storage catalyst 13 becomes a rich atmosphere where almost no oxygen is present, and accordingly even if rich combustion gas generation injection AI is stopped, for a time being, the inside of the NO_{X} storage catalyst 13 becomes a rich atmosphere. Therefore, when the rich combustion gas generation injection AI is stopped, if fuel B, C, and D for prevention of clogging is injected, the fuel B, C, and D for prevention of clogging is discharged into the outside air without being oxidized. As opposed to this, the post injection PI is performed in a state where the air-fuel ratio of the exhaust gas flowing into the NO_{X} storage catalyst 13 is maintained lean. Therefore, when post injection PI is being performed, the inside of the NO_{X} storage catalyst 13 becomes a lean atmosphere with excessive oxygen. Therefore, if fuel B, C, and D for prevention of clogging is injected when post injection PI is stopped, fuel B, C, and D for prevention of clogging is made to oxidize, and this fuel is never discharge into the outside air.

In this way, if stopping rich combustion gas generation injection AI or decreasing the amount of injection of rich combustion gas generation injection AI when fuel B, C, and D for prevention of clogging is injected from the hydrocarbon feed valve 15, unlike the case of stopping the post injection PI or decreasing the amount of injection of the post injection PI, the problem arises of the engine output torque fluctuating or the fuel B, C, and D for prevention of clogging being discharged into the outside air. Therefore, in a second embodiment of the present invention, priority is given to prevention of fluctuation of the engine output torque and prevention of discharge of fuel for prevention of clogging into the outside air compared with prevention of clogging, and injection of fuel B, C, and D for prevention of clogging from the hydrocarbon feed valve 15 is prohibited when rich combustion gas generation injection AI is being performed.

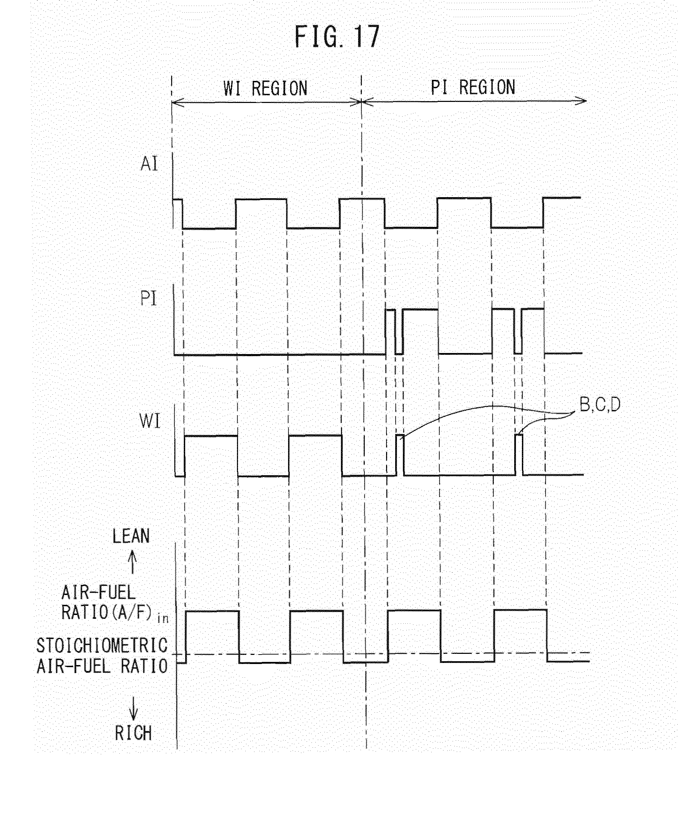

FIG. 17 shows the injection control when fuel for prevention of clogging is injected when SO_{X} release control is being performed in this second embodiment. Note that, in FIG. 17, AI shows the rich combustion gas generation injection to generate combustion gas of a rich air-fuel ratio, PI shows post injection, WI shows the fuel injection from the hydrocarbon feed valve 15, and (A/F)in shows the air-fuel ratio of the exhaust gas flowing into the NO_{X} storage catalyst 13. Further, FIG. 17, in the same way as FIG. 12, shows as an example the case where the operating state of the engine is first in the region WI of fuel injection from the hydrocarbon feed valve 15 which is shown in FIG. 7, then the operating state of the engine shifts to the post injection region PI which is shown in FIG. 7. Further, in FIG. 17, B, C, and D show injection of fuel for prevention of clogging which are shown by B, C, and D in FIG. 10.

Referring to FIG. 17, when the operating state of the engine is in the region WI of fuel injection from the hydrocarbon feed valve 15 which is shown in FIG. 7, rich combustion gas generation injection AI is intermittently performed to make the air-fuel ratio (A/F)in of the exhaust gas flowing into the NO_{X} storage catalyst 13 rich, and when the rich combustion gas generation injection AI is suspended, the fuel injection WI from the hydrocarbon feed valve 15 is performed to maintain the temperature TC of the NO_{X} storage catalyst 13 at the SO_{X} release temperature TX. At this time, the fuel injection WI from the hydrocarbon feed valve 15 is intermittently performed, so there is no danger of the nozzle opening of the hydrocarbon feed valve 15 clogging. Therefore, at this time, injection of fuel B, C, and D for prevention of clogging from the hydrocarbon feed valve 15 is not performed.

On the other hand, when the operating state of the engine shifts to the post injection region PI which is shown in FIG. 7, the fuel injection when the rich combustion gas generation injection AI is suspended shifts from the fuel injection WI from the hydrocarbon feed valve 15 to post injection PI and the fuel injection WI from the hydrocarbon feed valve 15 is stopped. Therefore, at this time, the danger arises of the nozzle opening of the hydrocarbon feed valve 15 clogging. Therefore, as shown in FIG. 17, fuel B, C, and D for prevention of clogging is injected from the hydrocarbon feed valve 15. However, if post injection PI is performed when fuel B, C, and D for prevention of clogging is injected from the hydrocarbon feed valve 15 in this way, the amount of fed fuel rapidly increases. As a result, the amount of heat generated at the NO_{X} storage catalyst 13 rapidly increases, so the problem is caused of the NO_{X} storage catalyst 13 rapidly rising in temperature and the NO_{X} storage catalyst 13 ending up overheating.

In this case, as explained above, when fuel B, C, and D for prevention of clogging is injected from the hydrocarbon feed valve 15, even if the post injection PI is stopped or the amount of the post injection PI is reduced, the problem does not arise of the engine output torque fluctuating or fuel B, C, and D for prevention of clogging being discharged into the outside air. Therefore, in the second embodiment which is shown in FIG. 17, when fuel B, C, and D for prevention of clogging is injected from the hydrocarbon feed valve 15, post injection PI is stopped. Of course, in this case, when fuel B, C, and D for prevention of clogging is injected from the hydrocarbon feed valve 15, the amount of the post injection PI may be reduced.

On the other hand, when rich combustion gas generation injection AI is being performed, if rich combustion gas generation injection AI is stopped or the amount of the rich combustion gas generation injection AI is reduced when fuel B, C, and D for prevention of clogging is injected from the hydrocarbon feed valve 15, as explained above, the problem will arise of the engine output torque fluctuating or the fuel B, C, and D for prevention of clogging being discharged into the outside air. Therefore, in the second embodiment which is shown in FIG. 17, when rich combustion gas generation injection AI is being performed, injection of fuel B, C, and D for prevention of clogging from the hydrocarbon feed valve 15 is prohibited. That is, when rich combustion gas generation injection AI is being performed, as shown in FIG. 17, injection of fuel B, C, and D for prevention of clogging from the hydrocarbon feed valve 15 is not performed.

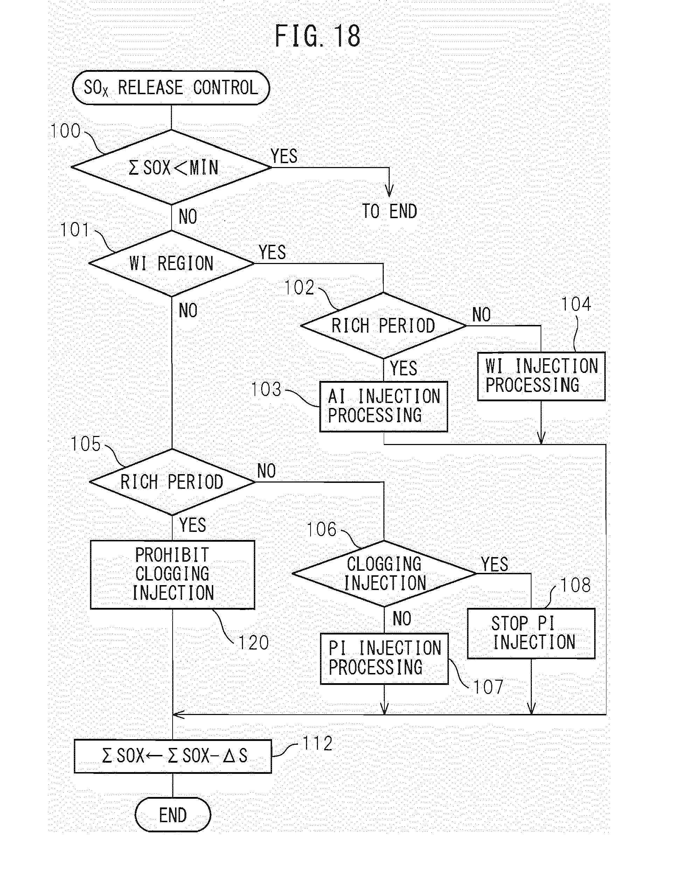

This second embodiment is performed using the exhaust control routine which is shown in FIG. 14. In this case, for the temperature elevation control which is performed at step 76 of FIG. 14, the temperature elevation control routine which is shown in FIG. 15 is used. Further, for the temperature elevation control which is performed at step 80 of FIG. 14 as well, a temperature elevation control routine similar to the temperature elevation control routine which is shown in FIG. 15 is used. On the other hand, for the SO_{X} release control which is performed at step 78 of FIG. 14, the SO_{X} release control routine which is shown in FIG. 18 is used. Steps 100 to 108 and step 112 in the SO_{X} release control routine which is shown in this FIG. 18 are completely the same as steps 100 to 108 and step 112 in the SO_{X} release control routine which is shown in FIG. 16. The SO_{X} release control routine which is shown in FIG. 18 differs from the SO_{X} release control routine which is shown in FIG. 16 only in the use of step 120 instead of steps 109, 110, and 111 in FIG. 16.

That is, if referring to FIG. 18, first, at step 100, it is judged if the SO_{X} amount ΣSOX which is stored in the NO_{X} storage catalyst 13 becomes smaller than the set minimum value MIN. When the stored SO_{X} amount ΣSOX is greater than the set minimum value MIN, the routine proceeds to step 101 where it is judged if the operating state of the engine is in the region WI of fuel injection from the hydrocarbon feed valve 15 which is shown in FIG. 7. When the operating state of the engine is in the region WI of fuel injection from the hydrocarbon feed valve 15 which is shown in FIG. 7, the routine proceeds to step 102 where it is judged if the time period is the rich time period where the air-fuel ratio(A/F)in of the exhaust gas flowing into the NO_{X} storage catalyst 13 should be made rich. When in the rich time period, the routine proceeds to step 103 where rich combustion gas generation injection AI is performed. As opposed to this, when not in the rich time period, the routine proceeds to step 104 where the fuel injection WI from the hydrocarbon feed valve 15 is performed. Next, the routine proceeds to step 112.

On the other hand, when it is judged at step 101 that the operating state of the engine is not in the region WI of fuel injection from the hydrocarbon feed valve 15 which is shown in FIG. 7, that is, when the operating state of the engine is in the post injection region PI which is shown in FIG. 7, the routine proceeds to step 105 where it is judged if the time period is the rich time period where the air-fuel ratio (A/F)in of the exhaust gas flowing into the NO_{X} storage catalyst 13 should be made rich. When not the rich time period, the routine proceeds to step 106 where it is judged if injection of fuel B, C, and D for prevention of clogging from the hydrocarbon feed valve 15 is being performed. When injection of fuel B, C, and D for prevention of clogging from the hydrocarbon feed valve 15 is not being performed, the routine proceeds to step 107 where post injection PI is performed. As opposed to this, when it is judged at step 106 that injection of fuel B, C, and D for prevention of clogging from the hydrocarbon feed valve 15 is being performed, the routine proceeds to step 108 where post injection PI is stopped. Note that, in this case, as explained above, it is also possible to reduce the amount of injected fuel of the post injection PI. Next, the routine proceeds to step 112.

On the other hand, when it is judged at step 105 that the time period is the rich time period, the routine proceeds to step 120 where injection of fuel B, C, and D for prevention of clogging from the hydrocarbon feed valve 15 is prohibited. As shown in FIG. 17 at this time, while rich combustion gas generation injection AI is being performed, injection of fuel B, C, and D for prevention of clogging from the hydrocarbon feed valve 15 is not performed. Next, the routine proceeds to step 112. At step 112, the stored SO_{X} amount ΣSOX is decreased by the released SO_{X} amount ΔS. Next, if it is judged at step 100 that the SO_{X} amount ΣSOX which is stored in the NO_{X} storage catalyst 13 becomes smaller than the set minimum value MIN, SO_{X} release control is ended.

Note that, as another embodiment, it is also possible to arrange an oxidation catalyst for reforming the hydrocarbons in the engine exhaust passage upstream of the exhaust purification catalyst 13.

## Claims

1. A control device of an internal combustion engine comprising a fuel injector arranged in an engine combustion chamber, an exhaust treatment device arranged in the engine exhaust passage, and a hydrocarbon feed valve arranged in the engine exhaust passage upstream of the exhaust treatment device, a main injection for generating engine output and a post injection for injecting fuel in a second half of an expansion stroke or in an exhaust stroke being performed from the fuel injector, **characterized in that**
if fuel is injected from the hydrocarbon feed valve when the post injection is performed for raising the temperature of the exhaust treatment device, the amount of the post injection is reduced or the post injection is stopped.

2. The control device of an internal combustion engine as claimed in claim 1, wherein if fuel for prevention of clogging of the nozzle opening of the hydrocarbon feed valve is injected from the hydrocarbon feed valve when the post injection is performed for raising the temperature of the exhaust treatment device, the amount of the post injection is reduced or the post injection is stopped.

3. The control device of an internal combustion engine according to claim 2, wherein said fuel for prevention of clogging is injected after the elapse of a predetermined time period after completion of injection of fuel from the hydrocarbon feed valve or when the temperature of the front end face of the hydrocarbon feed valve is maintained at a predetermined allowable temperature or more.

4. The control device of an internal combustion engine as claimed in claim 1, wherein when the temperature of the exhaust treatment device should be raised, the post injection or the fuel injection from the hydrocarbon feed valve is selectively performed in accordance with the operating state of the engine.

5. The control device of an internal combustion engine as claimed in claim 1, wherein the exhaust treatment device is comprised of an NO_{X} storage catalyst which stores NO_{X} when the air-fuel ratio of the exhaust gas is lean and releases the stored NO_{X} when the air-fuel ratio of the exhaust gas is made rich or is comprised of a particulate filter.

6. The control device of an internal combustion engine as claimed in claim 1, wherein the exhaust treatment device is comprised of an NO_{X} storage catalyst which stores NO_{X} when the air-fuel ratio of the exhaust gas is lean and releases the stored NO_{X} when the air-fuel ratio of the exhaust gas is made rich, and wherein when SO_{X} should be released from the NO_{X} storage catalyst, a rich combustion gas generation injection is performed from the fuel injector in a first half of the expansion stroke after the completion of the main injection for generation of engine output to generate rich air-fuel ratio combustion gas, and if fuel for prevention of clogging of the nozzle opening of the hydrocarbon feed valve is injected from the hydrocarbon feed valve when the rich combustion gas generation injection is being performed, the amount of the rich combustion gas generation injection is reduced or the rich combustion gas generation injection is stopped.

7. The control device of an internal combustion engine as claimed in claim 1, wherein the exhaust treatment device is comprised of an NO_{X} storage catalyst which stores NO_{X} when the air-fuel ratio of the exhaust gas is lean and releases the stored NO_{X} when the air-fuel ratio of the exhaust gas is made rich, and wherein when SO_{X} should be released from the NO_{X} storage catalyst, a rich combustion gas generation injection is performed from the fuel injector in a first half of the expansion stroke after the completion of the main injection for generation of engine output to generate rich air-fuel ratio combustion gas, and when said rich combustion gas generation injection is being performed, injection of fuel for prevention of clogging of the nozzle opening of the hydrocarbon feed valve is prohibited.
